(19) Europäisches Patentamt
European Patent Office
Office européen des brevets

(11) EP 3 144 774 A1

(12) EUROPEAN PATENT APPLICATION

(43) Date of publication:
22.03.2017 Bulletin 2017/12

(51) Int Cl.:
G06F 3/01 (2006.01)   G06F 3/0488 (2013.01)

(21) Application number: 15306415.9

(22) Date of filing: 15.09.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• FLEUREAU, Julien
  35576 CESSON-SEVIGNE (FR)
• DANIEAU, Fabien
  35576 CESSON-SEVIGNE (FR)
• LEFEVRE, Yoan
  35576 CESSON-SEVIGNE (FR)

(74) Representative: Huchet, Anne
TECHNICOLOR
1-5, rue Jeanne d'Arc
92130 Issy-les-Moulineaux (FR)

(54) METHODS AND APPARATUS OF TRANSMITTING A ROTATION ANGLE INFORMATION TO A SET OF ACTUATORS ASSOCIATED WITH A SURFACE

(57) The present disclosure relates to methods, apparatus or systems for rendering haptic texture properties on a surface associated with a set of at least one actuator. A system is used to detect parameters of a rubbing contact between the surface and at least one object. Friction, bumps and roughness are rendered by rotating and/or translating the surface according to parameters of the rubbing contact, in particular its direction and speed. A set of at least one actuator ensures the motion of the surface.

Figure 2

EP 3 144 774 A1

**Description**

**1. Technical field**

The present disclosure relates to rendering haptic properties of a texture on a surface when rubbing a surface, for example when the surface is a touch screen of a tablet or a smartphone.

**2. Background**

Tablets and smartphones allow users to use their sense of touch to interact with media content such as video and pictures. For example, a user may "feel" the texture or the roughness of an image when he/she is touching a device by the means of haptic effects such as vibrations generated by actuators embedded in the end-user devices or roughness variations using dedicated "smart surfaces".

Texture rendering on a surface can be achieved by the means of versatile renderers able to change their own surface properties depending on the underlying texture properties to render. One example of such renderers implements an array of pins going up and down (like a dynamic braille surface) and/or left and right. In this way, the surface granularity may be modulated. This approach has the disadvantage not to be adapted to touch screens as it disturbs the viewing conditions. Another approach makes use of embedded actuators (e.g. piezoelectric vibrators) to give vibrations as a feedback. Another approach addresses the problem of texture rendering by translating the screen in space. Some systems use horizontal translations (in the plane of the screen, left and right for example), others use backward and forward translations (the screen moves away and closer to the user's finger).

**3. Summary**

The purpose of the present disclosure is to overcome at least one of the disadvantages of the background. The present disclosure relates to a method of transmitting a rotation angle information to a set of at least one actuator associated with a surface, the method comprising:

- Obtaining data representative of a texture,
- Obtaining parameters representative of a first rubbing contact between at least one object and the surface,
- Computing a first rotation angle according to the parameters representative of the first rubbing contact and properties of the texture at the position of the first rubbing contact,
- Transmitting the rotation angle information depending on the first rotation angle to the set of at least one actuator.

According to a particular characteristic, the rotation angle information is equal to the first rotation angle.
According to a particular characteristic, the method further comprises:

- Obtaining parameters representative of a second rubbing contact between the at least one object and the surface,
- Computing a second rotation angle according to the parameters representative of the second rubbing contact and properties of the texture at the position of the second rubbing contact,

Wherein the rotation angle information is an interpolation between the first rotation angle and the second rotation angle.
Advantageously, the method further comprises:

- Computing a first translation vector according to the parameters representative of the rubbing first contact properties of the texture at the position of the first contact,
- Transmitting a translation vector information depending on the first translation vector to the set of at least one actuator.

In a variant, the translation vector information is equal to the first translation vector. In another variant, the translation vector information is an interpolation between a first and a second translation vector computed according to a first and a second rubbing contact and properties of the texture.
The present disclosure also relates to an apparatus configured for transmitting a rotation angle information to a set of at least one actuator associated with a surface, the apparatus comprising:

- Means for obtaining data representative of a texture,
- Means for obtaining parameters representative of a first rubbing contact between at least one object and the surface,
- Means for computing a first rotation angle according to the parameters representative of the first rubbing contact and properties of the texture at the position of the first rubbing contact,

- Means for transmitting a rotation angle information depending on the first rotation angle to the set of at least one actuator.

The present disclosure also relates to an apparatus configured for transmitting a rotation angle information to a set of at least one actuator associated with a surface, the apparatus comprising :

- A receiver obtaining data representative of a texture,
- A receiver obtaining parameters representative of a first rubbing contact between at least one object and the surface,
- A processor computing a first rotation angle according to the parameters representative of the first rubbing contact and properties of the texture at the position of the first rubbing contact,
- A transmitter transmitting a rotation angle information depending on the first rotation angle to the set of at least one actuator.

Optionally, the apparatus further comprises a transmitter transmitting an image associated to the texture to a display device.

The present disclosure also relates to a computer program product comprising instructions of program code for executing, by at least one processor, the abovementioned method of transmitting a rotation angle information to a set of at least one actuator associated with a surface, when the program is executed on a computer.

The present disclosure also relates to a (non-transitory) processor readable medium having stored therein instructions for causing a processor to perform at least the abovementioned method of transmitting a rotation angle information to a set of at least one actuator associated with a surface.

## 4. List of figures

The present disclosure will be better understood, and other specific features and advantages will emerge upon reading the following description, the description making reference to the annexed drawings wherein:

- **Figure 1** illustrates an example of a rubbing contact on a surface. In particular, Figure 1 illustrates an example of a finger in a rubbing contact with the surface, according to a specific embodiment of the present principles;
- **Figure 2** illustrates an exemplary diagram of the surface of Figure 1 associated with a set of at least one actuator. In particular, Figure 2 shows a rectangular surface associated with four actuators located at the four corners of the rectangular surface, according to a specific embodiment of the present principles;
- **Figure 3** shows a hardware embodiment of an apparatus configured to transmit a rotation angle information to a set of at least one actuator, such as the ones of Figure 2, associated with a surface of Figure 1, according to a specific embodiment of the present principles;
- **Figure 4** diagrammatically shows an embodiment of a method as implemented in a processing apparatus such as the apparatus of Figure 3, according to a specific embodiment of the present principles;
- **Figure 5** diagrammatically shows another embodiment of a method as implemented in a processing apparatus such as the apparatus of Figure 3, according to a specific embodiment of the present principles;

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

As used herein, a "texture" is an amount of data representative of the haptic properties of a surface of a real-world material. A texture comprises models describing, for example, friction, roughness and embossment of the surface of a material. For instance, rough stone is a coarse material with some granularity, velvet is smooth, sponge is soft and embossed and ice is flat and slippery. Texture may also comprise an image visually representative of the associated material.

As used herein, a "rubbing contact", is a physical contact between a surface and at least one object, the continuous contact moving on the surface with a non-zero speed.

The present principles will be described in reference to a particular example of a method of rendering haptic texture properties on a surface associated with a set of at least one actuator when the user is rubbing the surface. A system is used to detect parameters of a rubbing contact between the surface and at least one object (e.g. fingers of the user or a stylus). To render the texture properties as the location of the contact, a rotation angle around an axis perpendicular to the direction of the rubbing contact is computed and transmitted to the at least one actuator. The at least one actuator makes the surface rotate around the provided axis. A slope is created in favour or in opposition to the current rubbing contact motion in order to simulate a lower or higher friction feedback depending on the underlying texture properties at the current contact position. The amplitude of the slope is a function of the friction level at the point of the rubbing contact and of parameters of the rubbing contact (e.g. the rubbing speed, the contact pressure, the contact area, ...). According to an optional variant, in order to avoid potential saccadic motions which could decrease the quality of experience, the present principles further comprise interpolating the rotation angle over the time.

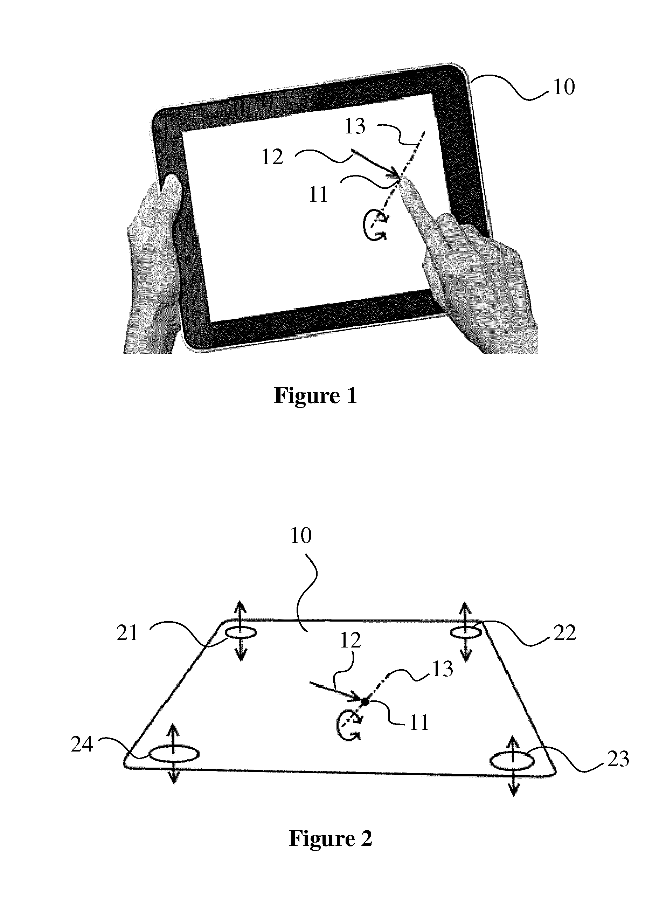

**Figure 1** illustrates an example of a rubbing contact on a surface (10). In particular, Figure 1 illustrates an example of a finger in a rubbing contact with the surface (10). The rubbing contact has a point location (11) and is moving according to a direction and a speed illustrated by the arrow (12). An axis (13) is computed. The axis (13) is contained within the plane of the surface (10) and is perpendicular to direction and speed (12) of the rubbing contact. The rotation angle is computed according to the rubbing contact parameters and according to the texture properties at the contact location. For example, the rotation angle may be a function of direction and speed of the rubbing contact on one hand and of friction of the texture at the location of the rubbing contact on the surface. An equation of the form of [E1] describes the determining of the rotation angle in this variant:

$$[E1]: \gamma = g(\vec{v}, f(x_c, y_c))$$

In the equation [E1]:

- $\gamma$ is the rotation angle,
- $\vec{v}$ is a vector representative of direction and speed of the rubbing contact in the frame of the surface,
- $x_c, y_c$ are the coordinates of the location of the rubbing contact in the frame of the surface,
- $f(x_c, y_c)$ is a datum representative of the texture at the location of the rubbing contact, for example friction or roughness,
- $g$ is a function used for determining the rotation angle according to the rubbing contact parameters and according to the texture properties at the contact location.

The function $g$ determines the rotation angle in order to command to the set of at least one actuator to rotate the surface in the opposite or same direction than the direction of the rubbing contact. For instance, if in the direction the rubbing contact is moving, the friction parameter of the texture is high, the surface will incline oppositely to the movement of the rubbing contact in order to make a rising slope and to make the user's displacement harder. On the contrary, if the friction parameter of the texture is low (e.g. a slippery texture), the surface will incline according to the direction of the rubbing contact to create a falling slope and then to make the user's displacement easier.

Applied directly, a model like the equation [E1] could induce saccadic motions which could potentially decrease the quality of experience. To avoid such potential saccadic motions, the rotation angle may be filtered making use of quaternion interpolation, according to a non-limiting embodiment. The apparatus considers a first pose of the surface, which is the pose of the surface at the moment of the current rubbing contact. A first rotation angle information (i.e. an axis and an rotation angle) is computed according to an equation of the form of [E1]. The apparatus determines a second pose, which is the first pose rotated by the rotation angle information. The first pose is represented by a quaternion called $q_{t-dt}$, and the second pose is represented by a quaternion called $q_t$. A second rotation angle information is computed according to a quaternion intermediate between $q_{t-dt}$ and $q_t$, determined by an equation like [E2] for example.

$$[E2] \quad q = q_{t-dt}(q_{t-dt}^{-1} \cdot q_t)^{\beta} \text{ with } \beta \in [0,1]$$

The parameter $\beta$ controls the smoothness of the pose trajectory. High values of $\beta$ leading to brutal change while low values correspond to slight changes. The second rotation angle information is transmitted to the set of at least one actuator.

Figure 2 illustrates an exemplary diagram of a surface (10) associated with a set of at least one actuator. In particular, Figure 2 shows a rectangular surface associated with four actuators (21, 22, 23, 24) located at the four corners of the rectangular surface. As a plane is defined by three points, the system may comprise three actuators or more. The format of the signal of containing the rotation angle information may be adapted to the set of actuators.

For the sake of clarity, the reference plane is considered horizontal. Each actuators may make the surface go up or down along the z-axis independently to cause a rotation of the surface. At rest position, the surface is horizontal and the four actuators lie at a rest elevation called $z_h$. To induce friction, these elevations are shifted by a value $dz_1$ for the actuator (21), $dz_2$ for the actuator (22), $dz_3$ for the actuator (23) and $dz_4$ for the actuator (24) making the surface rotate. Setting the values $dz_1$, $dz_2$, $dz_3$ and $dz_4$ may consist in solving a non-linear least-square optimization at each time t as in equation [E3].

$$[E3] \quad : \quad (dz_1, dz_2, dz_3)(t) = \operatorname*{argmin}_{(dz_1, dz_2, dz_3)} (\| q(dz_1, dz_2, dz_3) - q_{t-dt}(q_{t-dt}^{-1} \cdot q_t) \|^2)$$

Where $q(dz_1, dz_2, dz_3)$ represents a quaternion associated with the pose of the surface computed according location (11), direction and speed (12) of the rubbing contact . The elevation shift $dz_4$ is linearly correlated to the three previous elevation shifts due to the hyper-static configuration of the system illustrated in Figure 2. For such a system, the rotation angle information transmitted to the set of actuators contains a list of four elevation shifts.

A set of actuators as illustrated in Figure 2 has the advantage to allow vertical translations when the four elevation shifts are equal to each other. A translation vector information is computed in addition to and in correlation with the rotation angle information. The translation vector information is determined according to parameters of the texture such as embossment for example. A hollow on the texture (e.g. on the surface of a sponge) takes the form of an elevation shift toward the bottom. A bump, at the opposite, takes the form of an elevation shift toward the up. The translation vector information may be combined with a rotation angle information.

In another embodiment, the surface is nested in a box on which the actuators are fixed. The reference plane of the surface depends on the inclination of the box. In another embodiment, the at least one actuator is a robotic arm which can make the surface rotate and translate in every directions. The surface may translate in its own plane (e.g. horizontally, at the rest pose).

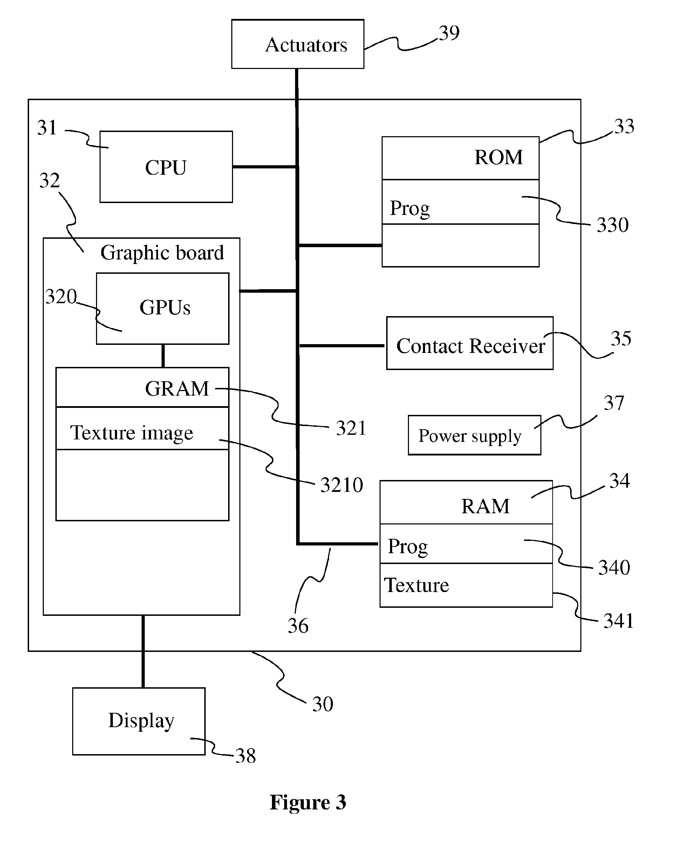

**Figure 3** shows a hardware embodiment of an apparatus (30) configured to transmit a rotation angle information to a set of at least one actuator associated with a surface. In this example, the device (30) comprises the following elements, connected to each other by a bus (36) of addresses and data that also transports a clock signal:

- a microprocessor (31) (or CPU),
- a graphics card (32) comprising:

  • several Graphical Processor Units (or GPUs) (320),
  • a Graphical Random Access Memory (GRAM) (321),

- a non-volatile memory of ROM (Read Only Memory) type (33),
- a Random Access Memory or RAM (34),
- a Contact Receiver (35) configured for receiving rubbing contact parameters. In an embodiment, the surface is a touch surface and the contact receiver is the touch surface itself. In another embodiment, the contact is detected by an external system such as a system of infra-red cameras or a pressure detection system and the contact parameters are transmitted to the apparatus (30) and received by the contact receiver (35).
- a power source (37).

Advantageously, the device (30) is connected to one or more display devices (38) of display screen type directly to the graphics card (32) to display images calculated in the graphics card. In a particular embodiment, the contact receiver (35) is a touch screen and the display(38) is integrated to the apparatus (30).

The apparatus (30) is connected, for example via the link (36), to a set of at least one actuator (39).

It is noted that the word "register" used in the description of memories (321), (33) and (34) designates in each of the memories mentioned, both a memory zone of low capacity (some binary data) as well as a memory zone of large capacity (enabling a whole program to be stored or all or part of the data representative of data calculated or to be displayed).

When switched-on, the microprocessor (31) loads and executes the instructions of the program contained in the RAM (34).

The random access memory (34) notably comprises:

- in a register (340), the operating program of the microprocessor (31) responsible for switching on the apparatus (30),
- data (341) representative of the texture,

According to one particular embodiment, the algorithms implementing the steps of the method specific to the present disclosure and described hereafter are advantageously stored in the memory GRAM (321) of the graphics card (32) associated with the device (30) implementing these steps. When switched on and once the data (341) are loaded into the RAM (33), the graphic processors (320) of the graphics card (32) loads these data into the GRAM (521) and execute the instructions of these algorithms in the form of microprograms of "shader" type using HLSL (High Level Shader Language) language or GLSL (OpenGL Shading Language) for example.

The random access memory GRAM (321) notably comprises data representative of the texture and may contain an image representative of the texture (3210).

According to another variant, a part of the RAM (33) is assigned by the CPU (31) for storage of the algorithms. According to another variant, the power supply (37) is external to the device (30).

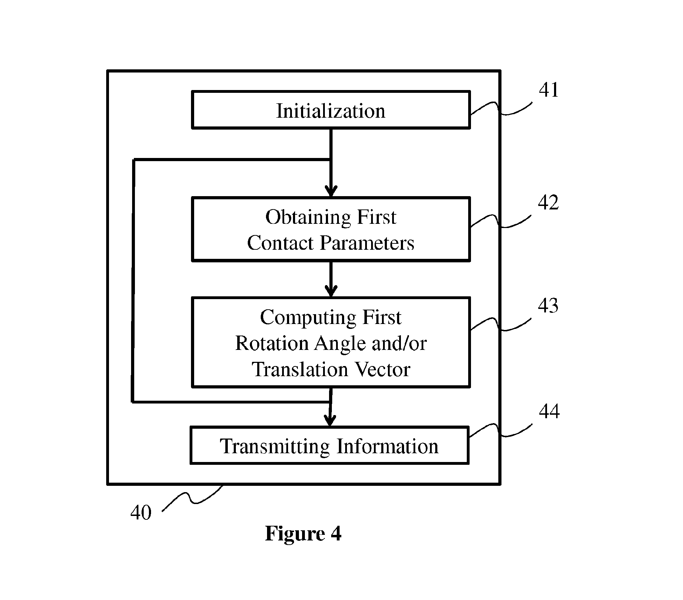

**Figure 4** diagrammatically shows an embodiment of a method (40) as implemented in a processing apparatus such as the apparatus (30) according to a non-restrictive advantageous embodiment.

In an initialization step (41), the apparatus obtains data representative of the texture, stored these data in a register (341) and reset its computational values according to the rest pose (i.e. default values at the rest pose).

A step (42) consists in receiving parameters of a rubbing contact. In a first embodiment, the surface is a touch surface and the rubbing contact is detected on and by the touch surface. The data representative of the rubbing contact comprise parameters such as the touch area, the duration of the contact, the direction and the speed of the touch displacement and the pressure over the touch area. All these parameters are detected by the touch surface. In a second embodiment, the rubbing contact is detected by an external system such as a system of infra-red cameras or a pressure detection system. Parameters of the detected rubbing contact are transmitted to the apparatus (30) and received by the contact receiver (35). When a change is detected in at least one parameter of the rubbing contact, the step (43) is executed. If no change is detected, the surface does not need to rotate or to translate and the step (43) is not executed. According to a variant, the step (43) is executed at a constant rate even if no change is detected in the rubbing contact parameters.

At a step (43), rotation angle information and/or translation vector information is/are computed according to the properties of the texture (341) at the rubbing contact location and to the rubbing contact parameters, in particular direction and speed of the rubbing contact and according to the principles presented in this disclosure. The rotation angle information and/or the translation vector information is/are transmitted to the set of at least one actuator at a step (44) that is executed each time a new information is computed. In a variant, both rotation angle information and translation vector information are transmitted to the set of at least one actuator at a constant rate, even if they did not change.

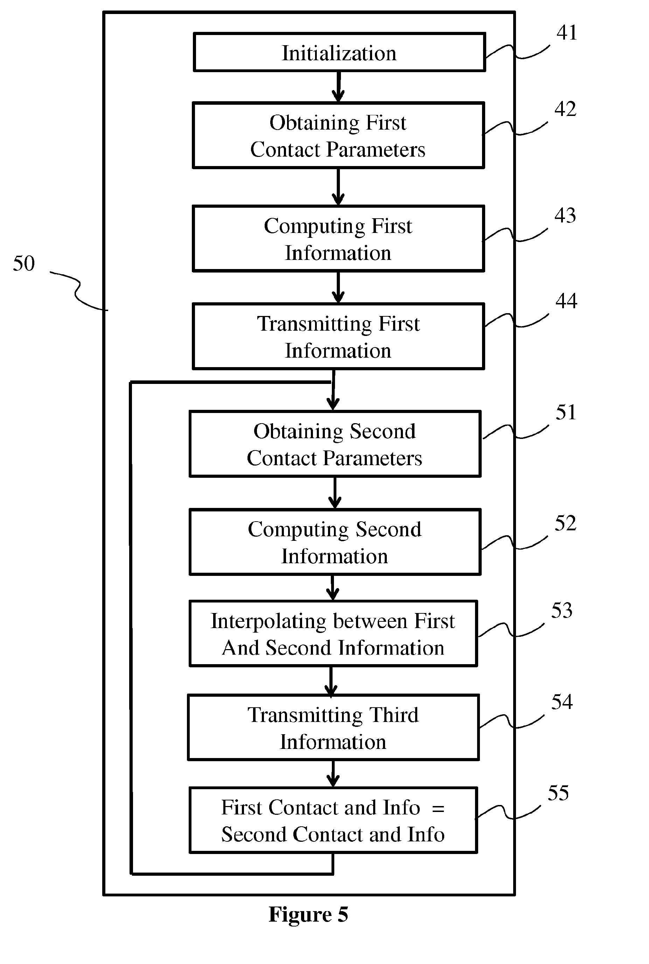

**Figure 5** diagrammatically shows another embodiment of a method (50) as implemented in a processing apparatus such as the apparatus (30) according to a non-restrictive advantageous embodiment.

The method (50) begins with the same steps (41), (42), (43), (44) than the method (40). A step (51) consists in obtaining a second set of parameters of the rubbing contact, an instant after the step (42). A step (52) is executed to compute a second rotation angle information and/or a second translation vector information the same way the first rotation angle information and/or first translation vector information are computed. At a step (53), a third rotation angle information is computed as an interpolation between the first and the second rotation angle information. According to a variant, the third rotation angle information is obtained by interpolating quaternions associated with resulting poses of the surface once the first rotation angle information and the second rotation information are applied to the surface by the set of at least one actuator. A third translation vector information is computed as an interpolation between the first and the second translation vector information. In a particular embodiment, the rotation angle information and the translation vector information are combined in one motion information. The computed information is transmitted to the set of at least one actuator at a step (54).

At a step (55), the parameters of the second rubbing contact replace the parameters of the first rubbing contact in the registers of the apparatus (30). The same way, the second rotation angle information and the second translation vector information are stored in place of the first rotation angle information and the first translation vector information. In a variant, the second motion information is stored in place of the first motion information. At this step (55), the apparatus (30) is ready to receive new rubbing contact parameters which are stored as second rubbing contact parameters at step (51).

Naturally, the present disclosure is not limited to the embodiments previously described. In particular, the present disclosure is not limited to a method of transmitting a rotation angle information to a set of at least one actuator associated with a surface but also extends to any method of rendering any texture property (e.g. roughness, embossment, granularity) implementing this rotating and/or translating rendering method. The implementation of calculations necessary to render the texture properties is not limited either to an implementation in shader type microprograms but also extends to an implementation in any program type, for example programs that can be executed by a CPU type microprocessor.

The implementations described herein may be implemented in, for example, a method or a process, an apparatus, a software program, a data stream, or a signal. Even if only discussed in the context of a single form of implementation (for example, discussed only as a method or an apparatus), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, smartphones, tablets, computers, mobile phones, portable/personal digital assistants ("PDAs"), and other devices.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of transmitting a rotation angle information to a set of at least one actuator associated with a surface, **characterized in that** the method comprises:

    - Obtaining data representative of a texture,
    - Obtaining parameters representative of a first rubbing contact between at least one object and the surface,
    - Computing a first rotation angle according to the parameters representative of the first rubbing contact and properties of the texture at the position of the first rubbing contact,
    - Transmitting the rotation angle information depending on the first rotation angle to said set of at least one actuator.

2. The method according to claim 1, wherein said rotation angle information is equal to the first rotation angle.

3. The method according to claim 1 further comprising:

    - Obtaining parameters representative of a second rubbing contact between the at least one object and the surface,
    - Computing a second rotation angle according to the parameters representative of the second rubbing contact and properties of the texture at the position of the second rubbing contact,

Wherein said rotation angle information is an interpolation between the first rotation angle and the second rotation angle.

4. The method according to one of claims 1 to 3 further comprising:

- Computing a first translation vector according to the parameters representative of the rubbing first contact properties of the texture at the position of the first contact,
- Transmitting a translation vector information depending on the first translation vector to said set of at least one actuator.

5. The method according to claim 4, wherein said translation vector information is equal to the first translation vector.

6. The method according to claim 1 or 2 further comprising:

- Computing a first translation vector according to the parameters representative of the first rubbing contact and properties of the texture at the position of the first rubbing contact,
- Obtaining parameters representative of a second rubbing contact between at least one object and the surface,
- Computing a second translation vector according to the parameters representative of the second rubbing contact and properties of the texture at the position of the second rubbing contact,
- Transmitting a translation vector computed as an interpolation between the first translation vector and the second.

7. The method according to claim 3 further comprising:

- Computing a first translation vector according to the parameters representative of the first rubbing contact and properties of the texture at the position of the first rubbing contact,
- Computing a second translation vector according to the parameters representative of the second rubbing contact and properties of the texture at the position of the second rubbing contact,
- Transmitting a translation vector computed as an interpolation between the first translation vector and the second translation vector.

8. An apparatus configured for transmitting a rotation angle information to a set of at least one actuator associated with a surface, **characterized in that** the apparatus comprises:

- Means for obtaining data representative of a texture,
- Means for obtaining parameters representative of a first rubbing contact between at least one object and the surface,
- Means for computing a first rotation angle according to the parameters representative of the first rubbing contact and properties of the texture at the position of the first rubbing contact,
- Means for transmitting a rotation angle information depending on the first rotation angle to said set of at least one actuator.

9. The apparatus according to claim 8, wherein said rotation angle information is equal to the first rotation angle.

10. The apparatus according to claim 8 further comprising:

- Means for obtaining parameters representative of a second rubbing contact between at least one object and the surface,
- Means for computing a second rotation angle according to the parameters representative of the second rubbing contact and properties of the texture at the position of the second rubbing contact,

Wherein said rotation angle information is an interpolation between the first rotation angle and the second rotation angle.

11. The apparatus according to one of claims 8 to 10 further comprising:

- Means for computing a first translation vector according to the parameters representative of the first rubbing contact and properties of the texture at the position of the first rubbing contact,

- Transmitting a translation vector information depending on the first translation vector to said set of at least one actuator.

12. The device according to claim 11, wherein said translation vector information is equal to the first translation vector.

13. The device according to claim 8 or 9 further comprising:

- Means for computing a first translation vector according to the parameters representative of the first rubbing contact and properties of the texture at the position of the first rubbing contact,
- Means for obtaining parameters representative of a second rubbing contact between at least one object and the surface,
- Means for computing a second translation vector according to the parameters representative of the second rubbing contact and properties of the texture at the position of the second rubbing contact,
- Means for transmitting a translation vector computed as an interpolation between the first translation vector and the second translation vector.

14. The device according to claim 10 further comprising:

- Means for computing a first translation vector according to the parameters representative of the first rubbing contact and properties of the texture at the position of the first rubbing contact,
- Means for computing a second translation vector according to the parameters representative of the second rubbing contact properties of the texture at the position of the second rubbing contact,
- Means for transmitting a translation vector computed as an interpolation between the first translation vector and the second translation vector.

15. A computer program product downloadable from a communication network and/or recorded on a medium readable by computer and/or executable by a processor, comprising program code instructions for implementing the steps of the method for transmitting a rotation angle information to a set of at least one actuator associated with a surface according to one of the claims 1 to 7 when it is executed by a processor.

**Figure 1**

**Figure 2**

Actuators — 39

31 — CPU

32 — Graphic board

320 — GPUs

GRAM — 321

Texture image

— 3210

36

ROM — 33

Prog — 330

Contact Receiver — 35

Power supply — 37

RAM — 34

Prog — 340

Texture — 341

30

Display — 38

**Figure 3**

Figure 4

Initialization — 41

Obtaining First
Contact Parameters — 42

Computing First
Information — 43

Transmitting First
Information — 44

Obtaining Second
Contact Parameters — 51

Computing Second
Information — 52

Interpolating between First
And Second Information — 53

Transmitting Third
Information — 54

First Contact and Info =
Second Contact and Info — 55

50

**Figure 5**

Europäisches
Patentamt

European
Patent Office

Office européen
des brevets

## EUROPEAN SEARCH REPORT

Application Number

EP 15 30 6415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/215079 A1 (JOHNSON MARK THOMAS [BE] ET AL) 22 August 2013 (2013-08-22)<br>* paragraph [0002] *<br>* paragraph [0005] *<br>* paragraph [0007] *<br>* paragraph [0014] *<br>* paragraph [0052] *<br>* paragraph [0054] *<br>* figure 4 * | 1-15 | INV.<br>G06F3/01<br>G06F3/0488 |
| X | & US 2010/231508 A1 (CRUZ-HERNANDEZ JUAN MANUEL [CA] ET AL)<br>16 September 2010 (2010-09-16)<br>* paragraph [0047] * | 1,8,15 | |
| X | US 2014/139450 A1 (LEVESQUE VINCENT [CA] ET AL) 22 May 2014 (2014-05-22)<br>* paragraph [0003] - paragraph [0004] *<br>* paragraph [0028] *<br>* paragraph [0063] *<br>* paragraph [0076] *<br>* paragraph [0080] *<br>* paragraph [0088] * | 1,8,15 | |
| X | US 2014/320436 A1 (MODARRES ALI [US] ET AL) 30 October 2014 (2014-10-30)<br>* paragraph [0006] - paragraph [0014] *<br>* paragraph [0040] *<br>* paragraph [0047] *<br>* paragraph [0051] - paragraph [0053] *<br>* paragraph [0056] * | 1,8,15 | TECHNICAL FIELDS SEARCHED (IPC)<br><br>G06F |

The present search report has been drawn up for all claims

| Place of search | Date of completion of the search | Examiner |
|---|---|---|
| Munich | 29 February 2016 | Bedarida, Alessandro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 6415

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | | | Publication date | Patent family member(s) | | | Publication date |
|---|---|---|---|---|---|---|---|
| US 2013215079 | A1 | | 22-08-2013 | CN | 103180802 | A | 26-06-2013 |
| | | | | EP | 2638450 | A1 | 18-09-2013 |
| | | | | JP | 2013541789 | A | 14-11-2013 |
| | | | | RU | 2013126438 | A | 20-12-2014 |
| | | | | TW | 201229854 | A | 16-07-2012 |
| | | | | US | 2013215079 | A1 | 22-08-2013 |
| | | | | WO | 2012063165 | A1 | 18-05-2012 |
| US 2014139450 | A1 | | 22-05-2014 | CN | 103838423 | A | 04-06-2014 |
| | | | | EP | 2733576 | A1 | 21-05-2014 |
| | | | | JP | 2014102830 | A | 05-06-2014 |
| | | | | KR | 20140064647 | A | 28-05-2014 |
| | | | | US | 2014139450 | A1 | 22-05-2014 |
| US 2014320436 | A1 | | 30-10-2014 | CN | 104122996 | A | 29-10-2014 |
| | | | | CN | 105144035 | A | 09-12-2015 |
| | | | | CN | 105144052 | A | 09-12-2015 |
| | | | | EP | 2796983 | A1 | 29-10-2014 |
| | | | | EP | 2989525 | A1 | 02-03-2016 |
| | | | | EP | 2989530 | A1 | 02-03-2016 |
| | | | | JP | 2014216026 | A | 17-11-2014 |
| | | | | KR | 20140128275 | A | 05-11-2014 |
| | | | | KR | 20160002941 | A | 08-01-2016 |
| | | | | KR | 20160003031 | A | 08-01-2016 |
| | | | | US | 2014320396 | A1 | 30-10-2014 |
| | | | | US | 2014320435 | A1 | 30-10-2014 |
| | | | | US | 2014320436 | A1 | 30-10-2014 |
| | | | | WO | 2014176528 | A1 | 30-10-2014 |
| | | | | WO | 2014176532 | A1 | 30-10-2014 |

EPO FORM P0459

For more details about this annex : see Official Journal of the European Patent Office, No. 12/82